Europäisches Patentamt

European Patent Office

Office européen des brevets

(19)

(11) Publication number: **0 234 714 B1**

(12) **EUROPEAN PATENT SPECIFICATION**

(45) Date of publication of patent specification: **29.07.92**  (51) Int. Cl.⁵: **F02P 5/15**

(21) Application number: **87300503.7**

(22) Date of filing: **21.01.87**

(54) Adaptive control system for an internal combustion engine.

(30) Priority: **20.02.86 GB 8604260**

(43) Date of publication of application:
**02.09.87 Bulletin 87/36**

(45) Publication of the grant of the patent:
**29.07.92 Bulletin 92/31**

(84) Designated Contracting States:
**BE DE ES FR GB IT NL SE**

(56) References cited:
**US-A- 3 327 553**
**US-A- 4 257 377**
**US-A- 4 379 239**
**US-A- 4 467 765**
**US-A- 4 498 438**

(73) Proprietor: **LUCAS INDUSTRIES public limited
company
Great King Street
Birmingham, B19 2XF West Midlands(GB)**

(72) Inventor: **Holmes, Michael
75 Featherstone Road
Kings Heath Birmingham(GB)**

(74) Representative: **Prutton, Roger et al
MARKS & CLERK Alpha Tower Suffolk Street
Queensway
Birmingham B1 1TT(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention relates to an adaptive control system for an internal combustion engine and also to a method of controlling such an engine.

In operating an internal combustion engine, it is necessary to establish values for various control parameters and, depending upon the particular control parameter, the value of the parameter may be varied continuously in accordance with one or more operating parameters of the engine.

In a spark ignition engine, for each ignition spark or engine fire in one of the engine cylinders, the spark advance angle must be established at the right moment to produce the peak combustion pressure soon after the piston has passed the top dead centre position so as to produce the optimum contribution to the output of the engine. Because the flame speed varies with the density of the air/fuel mixture, it is generally necessary to increase the spark advance angle with decreasing cylinder filling pressure. The spark advance angle must also be increased with increasing engine speed so as to allow for extra rotation of the engine crank shaft whilst the air/fuel mixture burns.

Until recently, the spark advance angle was established by a mechanical device responsive to manifold depression and engine speed. Such a mechanical device establishes the spark advance angle as a simple function of engine speed and load demand as represented by the manifold depression. Careful testing of engines shows that the spark advance angle is a complex function of load and speed and this function cannot be matched by a mechanical device. Modern ignition systems now use empirically derived characteristics for the spark advance angle which are stored as a look-up table in a read only memory.

These spark advance characteristics are determined by testing a number of samples of an engine and establishing an optimum spark advance angle for each load/speed point. A value for the spark advance angle for each point is then chosen which will give good economy subject to meeting various constraints such as low emissions and low knock levels.

Although this provides a much closer match to the optimum spark advance angle than was achieved with the mechanical devices, it still does not give the engine user the best possible spark advance angle for his engine throughout its life. There are a number of reasons for this. It is not possible to test enough engines to provide good statistics and the engines available during tests are often different from production engines. Also, variations in the engine characteristics may occur due to manufacturing tolerances and from small changes in engine design. During the life of an engine, various ageing effects will occur in the engine and in the sensors, actuators and electronic circuitry and these will create a mismatch between the optimum characteristics and those stored in the read only memory.

In U.S. patent 4 379 333, there is described an adaptive control system for controlling the spark advance angle. In this system, small positive and negative perturbations are superimposed on the spark advance angle and the resulting changes in engine speed are used to determine the differential or slope of engine output with respect to spark advance angle.

Each slope value is examined and these values are used to update the values stored in a spark advance schedule with the intention of obtaining optimum values for the spark advance angles.

In the arrangement described in this patent, the perturbations are imposed in a three phase cycle, a positive perturbation being imposed in one phase, no perturbation being imposed in the next phase, and a negative perturbation being imposed in the last phase. Each phase comprises 40-60 engine fires and the engine speed is sensed over a number of engine fires at the end of each phase. The effect of the change in spark advance value at the beginning of each phase will cause an initial transient response in the engine speed but, by the end of the phase, a steady response is obtained. Thus, by delaying measurement of the engine speed until the end of the phase, the transient response is eliminated. However, this method suffers from the disadvantage that a large number of engine fires is required to make each slope measurement.

In the arrangement described in this patent, the engine speed and load demand are measured a number of times during each perturbation cycle in order to determine the address for the correction which is to be made to the spark advance schedule. If the engine speed and load demand do not wander far from their initial values, these are regarded as a valid address. If excessive wander does occur, then a new address is chosen. At the end of each perturbation cycle, the record of the engine speed and load demand throughout the cycle is examined and, if one address occurs for more than, for example, 60% of the cycle, the conditions are considered steady enough to retain the correction at this address. Thus, the arrangement of this patent suffers from the disadvantage that it requires a complicated and uncertain procedure for determining the addresses of the corrections.

It is accordingly an object of this invention to provide a new or improved adaptive control system for an internal combustion engine and also a method of controlling such an engine in which the above mentioned disadvantages are overcome or reduced.

According to this invention, there is provided an adaptive control system for an internal combustion engine having a flywheel connected through resilient shafting and a gear arrangement to a load, said flywheel, resilient shafting and gear arrangement forming a resonant system which has a particular resonant frequency for each gear ratio established by said gear arrangement, said control system comprising:- means for determining a basic value for an engine control parameter (hereinafter referred to as "said perturbed parameter"); a position transducer for detecting the passage of the engine crankshaft past at least one reference point during each engine fire period; a perturbation generator for perturbing said perturbed parameter about said basic value, said perturbation generator generating a periodic perturbation waveform and applying a positive perturbation to said perturbed parameter during the first part of each period of the perturbation waveform and a negative perturbation to said perturbation parameter during the second part of each period of the perturbation waveform, each period of said waveform being equal to a whole number of engine fire periods and the frequency of said waveform being greater than three quarters of the highest resonant frequency of said resonant system; means for creating at least one series of contiguous positive and negative measurement windows associated respectively with first and second parts of said perturbation waveform, each measurement window lagging its respective part of the perturbation waveform by a predetermined phase shift; means for calculating the slope of engine output with respect to said perturbed parameter, said calculating means calculating said slope from the change in engine speed between adjacent measurement windows; and means for using said slope to apply a correction to at least one engine control parameter (each of which is hereinafter referred as "a corrected parameter").

By using a perturbation waveform which has a frequency greater than three quarters of the highest resonant frequency of the resonant system, the phase difference between the response in the engine speed and the perturbation waveform will not vary greatly between the different gear ratios established by the gear arrangement. Consequently, by measuring the change in engine speed in measurement windows which lag the perturbation waveform by a phase shift which is a compromise of the phase shifts in the different gears, the transient response in the engine speed can be used for making slope measurements. As the transient response is used the slope measurements can be made at a much higher rate than in the prior art arrangement discussed above. Also, as each cycle of the perturbation waveform is short, the engine speed and load demand are unlikely to vary significantly during it and so the correct address for the correction to the spark advance angle may be readily determined.

Preferably, said system further includes a first accumulator for accumulating for each positive measurement window the fire periods whose central points fall within said positive window to produce a total fire period for said positive window; and a second accumulator for accumulating for each negative measurement window the individual fire periods whose central points fall within said negative window to produce a total fire period for said negative window; said calculating means calculating said slope from said total fire periods accumulated in said first and second accumulators.

In one embodiment of the present invention, said slope calculating means calculates the average engine speed during each positive measurement window by dividing the number of engine fires occurring during said window by the total fire period accumulated in said first accumulator, calculating the average engine speed during each negative measurement window by dividing the number of engine fires occurring in said negative window by the total fire period accumulated in said second accumulator, and calculating each slope value by subtracting the average engine speed occurring in a positive window from the average speed occurring in the subsequent negative window to obtain a first transition value, subtracting the average engine speed occurring in a negative window from the average speed occurring in a subsequent positive window to obtain a second transition value, and subtracting the first transition value from the second transition value to obtain said slope value.

In another arrangement of this invention, said slope calculating means calculates each slope value by subtracting the product of the number of engine fires occurring in one positive window and the total fire period occurring in a subsequent negative window from the product of the total number of fires occurring in said subsequent negative window and the total fire period occuring in said one positive window to produce a first difference value, subtracting the product of the number of engine fires occurring in one negative window and the total fire period for a subsequent positive window from the product of the total number of fires occurring in said subsequent positive window and the total fire period occurring in said one negative window to produce a second difference value, and subtracting said first difference value from said second difference value to produce said slope value.

Conveniently, said correction value determining means compares each slope value with a reference value to obtain a difference value, integrates said difference values to obtain at least one average value, and uses said correction value to correct at least one, corrected parameter.

In one arrangement of this invention, the system includes means for determining the engine speed, means for determining the load demand to which the engine is subjected, and basic values are stored for said perturbed parameter in a schedule as a function of engine speed and load demand.

Conveniently, in this arrangement, basic values for said perturbed parameter are stored in said schedule as a two dimensional array as a function of engine speed and load demand, and each basic value of parameter is determined from the values stored at the four array points in the speed/load plane which surround the prevailing speed and load, said perturbed parameter at each point being multiplied by a respective weighting factor to form a product value and the four resulting product values being summed to produce the basic value, said weighting values being determined by forming a main rectangle whose corners lie on said four array points, dividing said main rectangle into four sub-rectangles by the abscissa and ordinate which pass through the prevailing engine speed and load demand point, and calculating the weighting factor for each array point by dividing the area of the diagonally opposite sub-rectangle by the area of the main rectangle.

In a specific embodiment of the present invention, said perturbed parameter is an ignition timing parameter.

According to another embodiment of this invention, there is provided a method of controlling an internal combustion engine, said engine having a flywheel connected through resilient shafting and a gear arrangement to a load, said flywheel, resilient shafting and gear arrangement forming a resonant system which has a particular resonant frequency for each gear ratio established by said gear arrangement, said method comprising: perturbing an engine control parameter (hereinafter referred to as "said perturbed parameter") by generating a periodic perturbation waveform, applying a positive perturbation to said perturbed parameter during the first part of each period of the perturbation waveform and a negative perturbation to said perturbed parameter during the second part of each period of the perturbation waveform, each period of said waveform being equal to a whole number of engine fire periods and the frequency of said waveform being greater than three quarters of the highest resonant frequency of said resonant system; creating at least one series of contiguous positive and negative measurement windows associated respectively with first and second parts of said perturbation waveform, each measurement window lagging its respective part of the perturbation waveform by a predetermined phase shift; calculating the slope of engine output with respect to said perturbed parameter from the change in engine speed between adjacent measurement windows; and using said slope to apply a correction to at least one engine control parameter (each of which is hereinafter referred to as "a corrected parameter").

This invention will now be described in more detail, by way of example, with reference to the drawings in which:-

Fig 1 is a diagram of the functional components of an adaptive control system embodying this invention;

Fig 2 is a graph illustrating the phase lag between a perturbation waveform and the resulting change in engine speed as a function of perturbation

Fig 3 is a graph of engine speed as a function of crankshaft angle;

Fig 4 is a block diagram of a microcomputer arrangement which implements the functional components of Figure 1;

Fig 5 is a layout diagram of the computer program forming part of the control system of Figure 4;

Fig 6 is a diagram illustrating the calculation of weighting factors used in the program;

Figs 7 to 11 form a flow chart of part of the program; and

Figs 12 to 13 show a modification to the flow chart.

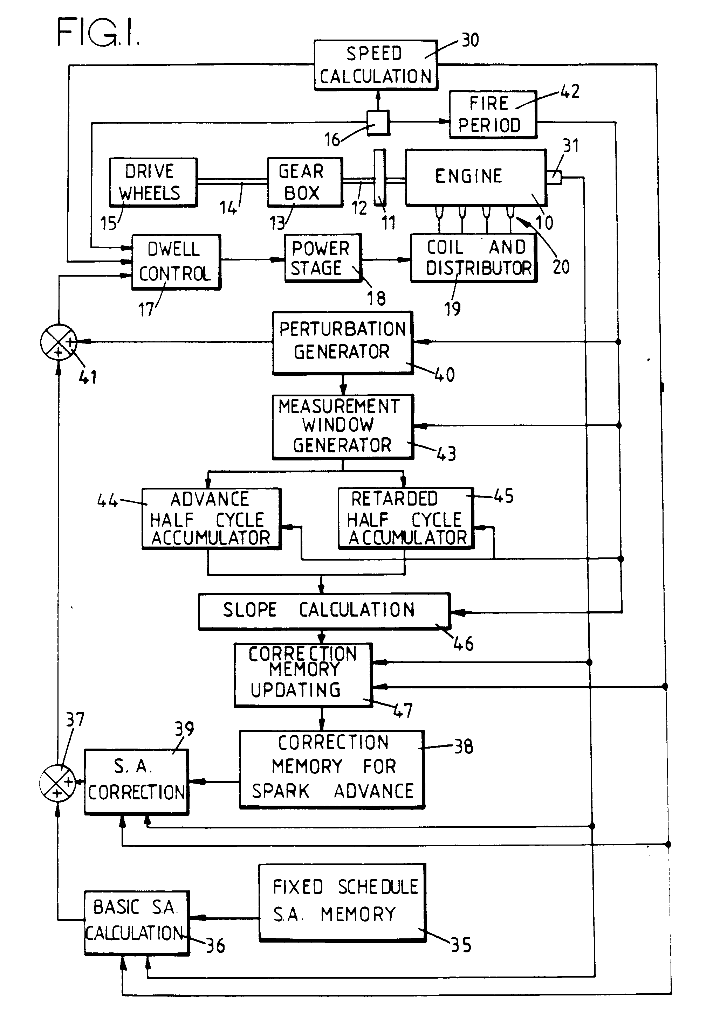

Referring now to Figure 1, there is shown in functional form an adaptive control system embodying this invention and installed in a motor vehicle. The control system comprises a four cylinder spark ignition internal combustion engine 10 which is provided with a flywheel 11. The engine 10 is installed in a vehicle and is connected through a resilient shaft 12, a gear box 13, and a further resilient shaft 14 to drivewheels 15 which form a load. Although not shown, a clutch is also provided.

The flywheel 11 is associated with a position transducer 16 which produces a reference pulse for each 180° of rotation of the engine crankshaft. Each pulse is produced when the piston in the cylinder to executing an expansion stroke is at 30° after the top dead centre position. The pulses from transducer 16 are supplied to a dwell control means 17, the output of which is connected through a power stage 18 to a coil and distributor 19. The coil and distributor 19 is connected to four spark ignition plugs 20 and causes ignition sparks to occur in these plugs at appropriate moments.

The output of transducer 16 is also supplied to a speed calculation means 30 which calculates engine speed and supplies this to the dwell control means 17.

The engine is provided with a transducer 31 which measures the load demand to which the engine is subjected. In the present example, the transducer 31 measures the pressure in the inlet manifold for the engine cylinders. The load demand could also be detected by measuring other quantities such as the throttle valve opening position or the rate of air flow into the inlet manifold.

The system also includes a memory 35 in which is stored a two dimensional array of spark advance angles, the abscissa and ordinate of the array corresponding to engine speed and load demand. The memory 35 and the speed calculation means 30 and transducer 31 are connected to a calculation means 36. For each prevailing engine speed and load demand, the calculation means 36 calculates a basic value for spark advance and supplies this to one input of a summer 37. The calculation means 36 calculates this basic value from the spark advance values stored in the array in memory 35 at the four points in the speed/load plane surrounding the prevailing engine speed and load demand. Each of these values is multiplied by an appropriate weighting factor and the four resulting values are added to provide the basic spark advance value. Thus, the calculation means 36 calculates the basic spark advance value by interpolation. The spark advance values are stored in memory 35 at a density which provides a good match for the irregularities of the true optimum spark advance characteristics of the engine 10.

The spark advance values in memory 35 take the form of a fixed schedule which is established from rig-tests on sample engines. For the various reasons which have been outlined above, the optimum spark advance values will differ from those stored in memory 35. As will shortly be described in detail, the system imposes small positive and negative perturbations on the spark advance value and senses the change in engine output speed which these cause. From the change in engine speed, correction values are stored in a correction memory 38. These correction values are also stored as a two dimensional array in which the abscissa and ordinate represent engine speed and load demand and they are stored with the same density as the values stored in memory 35.

For the prevailing engine speed, a correction value is calculated in a correction value calculation means 39 and supplied to a second input of summer 37. The calculation means 39 receives the outputs of speed calculation means 30 and load demand transducer 31 and calculates the correction value for the prevailing engine speed from the values stored in memory 38 by using the same interpolation method as that used by the calculation means 36.

The perturbation values are determined in a perturbation generator 40 and supplied to an input of a summer 41. The other input of summer 41 receives the output of summer 37, and the output of summer 41 is supplied to the dwell control means 17 as a command value for the spark advance. The dwell control means 17 uses the output of the speed calculation means 30 and position transducer 16 to ensure that ignition sparks occur at the commanded spark advance values.

Because ignition sparks occur intermittently in the spark ignition engine, the torque output of engine 10 fluctuates during each engine cycle. In order to smooth these fluctuations, the flywheel 11 is provided and it converts the fluctuations in torque into small accelerations and decelerations. The resilient nature of shafts 12 and 14 prevent these small accelerations and decelerations from causing changes in the speed of drivewheels 15.

The flywheel 11, shafts 12 and 14, and the gear box 13 form a resonant system. The resonant frequency varies with the gear ratio established in the gear box 13. In the present example, the system has a resonant frequency of 4Hz in second gear and 9Hz in fourth gear.

Every single perturbation in the spark advance angle causes a change in output torque produced by engine 10. In view of the resonant nature of flywheel 11 and shafts 12 and 14, the resulting change in the speed of flywheel 11 has two components. The first of these components is a damped ringing response at the appropriate resonant frequency and, in the particular. engine mentioned above, the ringing decays with a time constant of 0.3 seconds. The second component is the longer term response which is associated with the new steady state which arises when the change in resistance forces caused by the change in vehicle speed match the change in torque from the engine. With the particular engine discussed above, this second component has a time constant of 7 seconds in fourth gear.

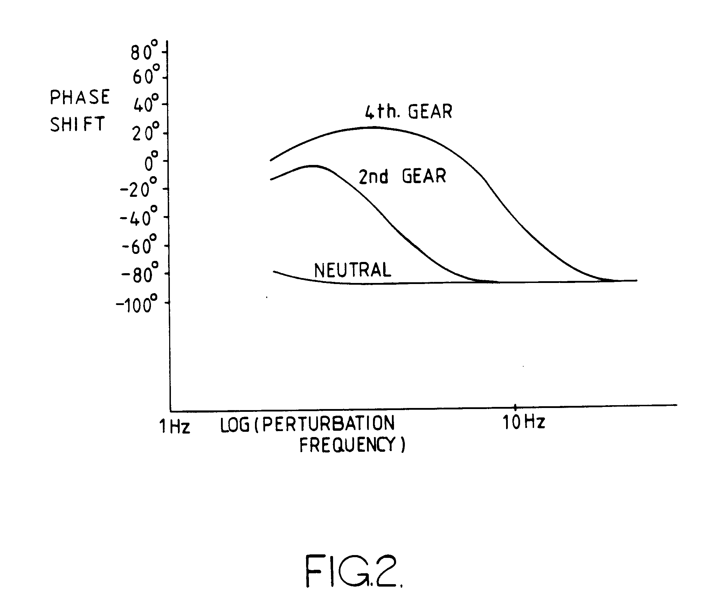

In order to measure the slope of engine output with respect to spark advance as quickly as possible, the first part of the response should be used to calculate the slope. It is also desirable to provide a system which will work in any gear and which will provide comparable results in the different gears without knowledge of which particular gear is engaged. In Figure 2, there is shown a graph of the phase shift between a perturbation waveform generated by perturbation generator 40 and the resulting change in engine speed as a function of perturbation frequency for fourth gear, second gear and neutral. As may be seen, the phase shift changes rapidly with frequency in the region below the 9Hz and there are also large differences between the phase shift in the different gears. In contrast, in the region above 10Hz, the phase shift changes slowly with frequency and the differences in phase shift in the different gears are small. With increasing frequency, for all gears the phase shift approaches the 90° phase shift obtained when neutral is engaged. In order to provide comparable results in the different gears, it is therefore preferred that the perturbation frequency produced by perturbation generator 40 is greater than the highest resonant frequency of the resonant system formed from flywheel 11, shafts 12 and 14 and gear box 13. In the present case, this means the perturbation frequency should be greater than 9Hz which is the resonant frequency in fourth gear. However, in other engines, the phase changes below the resonant frequency may be smaller than those shown in Figure 2 and it is anticipated, that for some engines satisfactory results could be obtained with a perturbation frequency equal to or greater than three quarters of the highest resonant frequency.

There is a further restraint on the perturbation frequency produced by perturbation generator 40. Perturbations in the spark advance value can only take effect at the moments when ignition is initiated. In the case of a four cylinder engine, this occurs twice for each revolution of the crank shaft. Therefore, the perturbation frequency cannot take a fixed value. Therefore, perturbation generator 40 generates a two level waveform at a frequency which is greater than a minimum frequency, such as the resonant frequency or three quarters of the resonant frequency, and with a period which is equal to a whole number of fire periods of engine 10. During the first part of each period, the perturbation generator 40 sets the perturbation value so as to cause a small increase in the spark advance angle and, in the second part of each period, it sets the perturbation value so as to cause a small decrease in the spark advance angle.

The output of position transducer 16 is supplied to a fire period calculating means 42 which calculates each fire period. Position transducer 16 produces a reference pulse when the respective piston is at 30° after top dead centre. Thus the actual period calculated is the period which elapses between these pulses. The fire period is supplied to the perturbation generator 40 and also to a measurement window generator 43, an advance half cycle accumulator 44, a retarded half cycle accumulator 45, and slope calculation means 46.

The measurement window generator 43 receives the waveform from perturbation generator 40 and creates a series of contiguous positive and negative measurement windows, each of which corresponds to a respective first part or second part of a period of the perturbation waveform. The measurement windows are shifted in phase from the perturbation waveform by an amount which is a compromise of the actual phase shifts which occur in the various gears between the perturbation waveform and the engine response. These actual phase shifts have been described with reference to Figure 2. In the present example, this phase shift is 72° which is 0.2 of a perturbation cycle. The positive and negative measurement windows are supplied respectively to the advance and retarded half cycle accumulators 44 and 45.

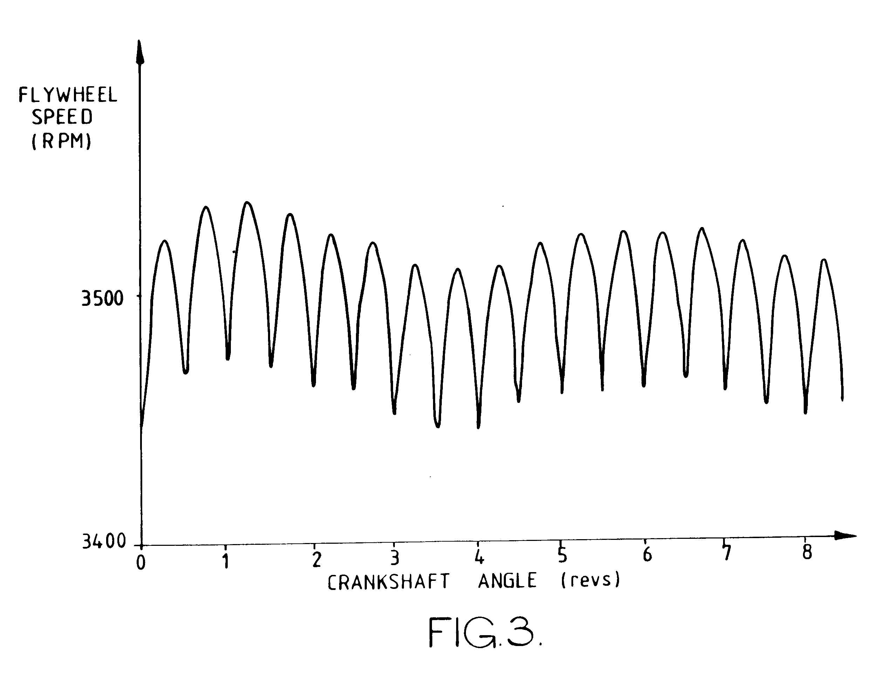

Referring now to Figure 3, there is shown the variation in the speed of flywheel 11 as a function of crankshaft angle. As may be seen, during each engine cycle severe fluctuations occur. There is therefore a danger that the severe fluctuations in engine speed could confuse measurements of the change in engine speed caused by the perturbations to the spark advance angle. In order to avoid this danger, the engine speed is sensed by measuring the period for whole engine fires only. Specifically, engine fire periods whose central points fall in the positive and negative measurement windows are accumulated respectively in the advance and retarded half cycle accumulators 44 and 45.

As mentioned above, the slope of engine output with respect to spark advance is calculated in the slope calculation means 46. Following each measurement window, the average engine speed during that window is measured from the accumulated fire periods. Following each positive measurement window, the effect of the transition from the part of the period in which the spark advance angle was decreased to the part of the period in which it was increased is evaluated by subtracting the average speed during the negative measurement window from the average speed during the positive measurement window. Similarly, at the end of each negative measurement window, the effect of the transition from the part of the period in which the spark advance was increased to the part of the period in which it was decreased is evaluated by subtracting the average speed during the positive measurement window from that during the subsequent negative measurement window. Thus, these two transition values are evaluated alternately. These two transistion values reflect both the change in torque generated by the perturbations and also the change in speed due to any acceleration or deceleration which is caused, for example, by movement of the accelerator by the driver or by changes in resistance forces or road gradient. In order to eliminate the effect of acceleration or deceleration from the slope measurement, the slope is then evaluated by subtracting the transition value associated with changing the perturbation from an increased value to a decreased value from the transition value associated with changing the perturbation from a decreased value to an increased value.

The curve relating torque output to spark advance has a single maximum at which the slope of engine output with respect to spark advance will be Zero. As will be explained, in the present example the spark advance angle is corrected with the intention of achieving this maximum. However, in some engines under high load, the spark advance angle which causes maximum output may also permit knocking to occur. Also, in some engines, the maximum may be associated with undesirable exhaust emissions. Therefore, for some engines, it may be required to vary the spark advance until the slope reaches a predetermined value other than zero.

For greater accuracy under conditions where the spark advance is controlled to achieve a non-zero value of the slope, it would be better to measure actual torque rather than torque derived from speed measurement. However, due to the inconvenience of torque measurement, it is preferred to measure speed and compensate for variations between measured speed and torque, for example, by calculating engine output as an appropriate function of engine speed.

The slope calculated by the slope calculation correction means 46 is supplied to correction memory updating means 47. The means 47 also receive the engine speed and load demand from the speed calculation means 30 and load transducer 31. For each slope measurement, the updating means 47 updates the values stored in memory 38 for each of the four array points surrounding the prevailing engine speed and load demand. Specifically, for each array point a new correction is calculated and stored from the old correction in accordance with the following formula:-

new correction =
old correction $+ k_1$ x (weighting factor) x (slope)

where $k_1$ is a constant.

This formula corrects the values in the memory 38 from the slope measurements by integration and smoothes out the noise component in the slope measurements. The constant $k_1$ should be chosen so as to be small enough to reduce these noise components to a low level but large enough to provide rapid convergence to the optimum spark advance angle. The weighting factor given in this formula is the same as the weighting factor used by the correction means 36 and 39. The method of calculating the weighting factor will be described in detail below.

As the density of array points in the memory 35 is chosen to give a good match with the optimum spark advance characteristics, the information in the slope measurements will represent a mismatch which has occurred between the actual optimum characteristics and those stored in the memory 35. It is therefore reasonable to update memory 38 by a process which is symmetrical with the interpolation process used to derive the spark advance angle and the formula given above achieves this. Furthermore, in the formula given above, the values stored in memory 38 are corrected in proportion to the magnitude of each slope measurement and so maximum advantage is taken of the information present in each slope measurement.

The combination of the rapid method of making slope measurements which is achieved by using the first component of the engine speed response and the formula given above for updating memory 38 will permit the spark advance angle to be corrected to its true optium value for the complete range of engine speed and load demands in approximately six hours of driving a motor vehicle in mixed road conditions. Although this represents a considerable improvement over prior art arrangements, it is relatively long compared with the average time for each operation of an engine. In view of this, it is preferred that memory 38 is of a non-volatile construction. By using such a construction, the corrections are restored between periods of engine operation. Thus, memory 38 contains a complete schedule of updated corrections addressed by engine speed and load demand.

Two further refinements to the formula given above for updating memory 38 will now be described.

In addition to the mismatch in the spark advance angle for the prevailing speed and load demand, each slope measurement may also contain information which refers to the whole speed/load demand plane. For example, there may be a mismatch for spark advance across the entire plane due, for example, to changes in barometric pressure or in the composition of fuel. In order to take advantage of this information, each slope measurement may be used to update all the correction values in memory 38 in accordance with the following formula:-

new correction = old correction $+ k_2$ x (slope)

Alternatively, this formula may be used to update a single value which is added at summer 37 to the correction value calculated by calculation means 39.

The constant $k_2$ is of course much smaller than the constant $k_1$ mentioned above. However, the constant $k_2$ must be chosen to be large enough to give convergence for changes in variables such as a barometric pressure in a few minutes across the entire load/speed plane.

The second refinement enables the entire spark advance characteristics to be tilted and this may be required, for example, when the position transducer 16 is poorly calibrated or subject to drift. With this second refinement, four offset correction values are stored in an additional memory corresponding to the four corners of the speed/load plane. Each slope measurement is then used to update these four values by multiplying the slope by an appropriate weighting factor and an appropriate constant. In calculating each correction value, these four offset values are then multiplied by appropriate weighting factors and the resulting value is added to the value calculated from the four array points surrounding the prevailing engine speed and load demand.

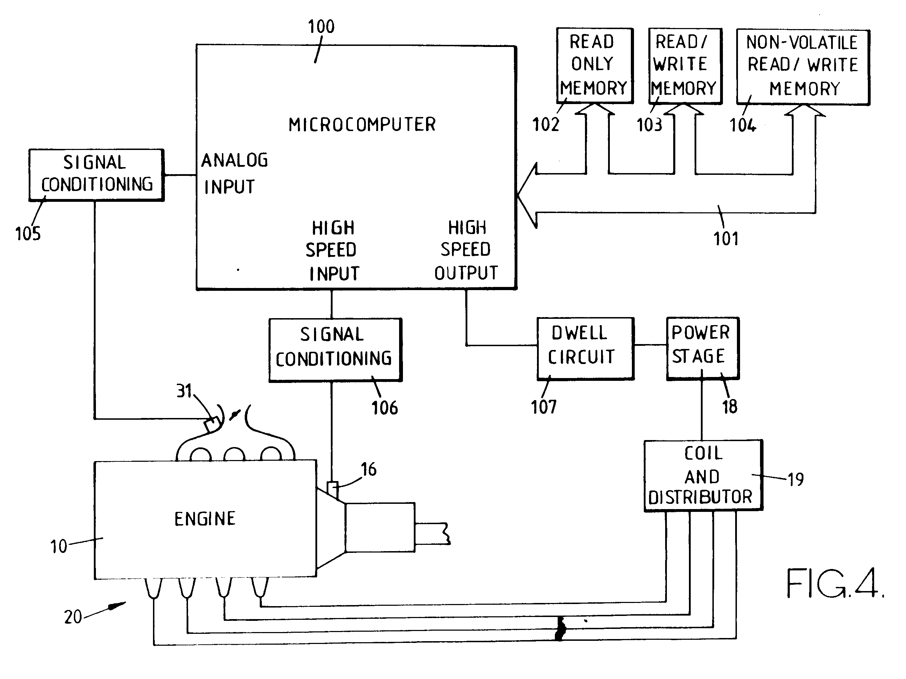

The various functional blocks shown in Figure 1 are implemented using a microcomputer arrangement and this arrangement is shown in Figure 4.

As shown in Figure 4, the microcomputer arrangement comprises an Intel Corporation 8097 microcomputer 100 which is connected via a data and address bus 101 to a type 27C64 read only memory 102, a Hitachi type 6116 read/write memory 103, and a Greenwich Instruments Limited type NVR2 non-volatile read/write memory 104. The program and fixed schedules are stored in memory 102, temporary variables are stored in memory 103, and the corrections for the spark advance angle are stored in memory 104.

The microcomputer arrangement implements the speed calculation means 30, the fire period calculation means 42, the perturbation generator 40, the measurement window generator 43, accumulators 44 and 45, slope calculation means 46, updating means 47, the memories 35 and 38 together with the calculation means 36 and 39, summers 37 and 41 and part of dwell control means 17.

The load demand transducer 31 is connected through a conventional signal conditioning circuit 105 to an ANALOG input of microcomputer 100. The position transducer 16 is of the variable reluctance type and coacts with a toothed wheel mounted on the engine crankshaft and from which teeth have been removed to establish the required reference positions. Transducer 16 is connected through a signal conditioning circuit 106 to a HIGH SPEED input of microcomputer 100.

A HIGH SPEED output of microcomputer 100 is connected to the input of a dwell control circuit 107. The dwell control circuit 107 together with part of the program stored in memory 102 perform the function of the dwell control means 17 of Figure 1. The dwell control circuit 107 is a type L497 dwell control circuit supplied by S. G. S. Limited. The dwell control circuit 107 initiates the build up of current in the primary winding of the ignition coil at the correct moment to achieve the required level just before the current is interrupted. The dwell control circuit 107 also limits the coil current to the required level during the short period which elapses between achieving the required current and the current being interrupted. The output of dwell control circuit 107 is connected to the power stage 18 which, as mentioned with reference to Figure 1, is connected to the input of the coil and distributor 19.

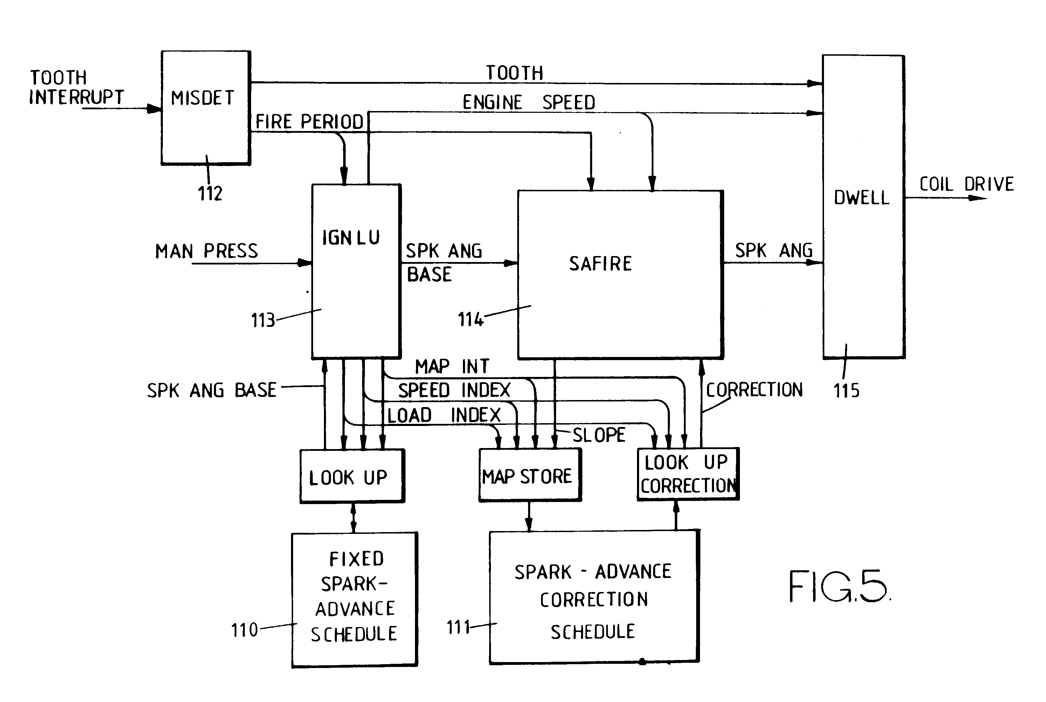

Referring now to Figure 5, there is shown the general arrangement of the modules which form the program and also the flow of data between these modules. The program comprises the modules MISDET 112, IGNLU 113, SAFIRE 114, and DWELL 115. The module IGNLU calls a sub-module LOOK UP and the module SAFIRE calls sub-modules MAP STORE and LOOK UP CORRECTION. Figure 5 also shows a fixed spark-advanced schedule 110 which contains the fixed spark advance values and which corresponds to memory 35 shown in Figure 1. Figure 5 further shows a spark-advance correction schedule 111 which contains the correction values for spark advance and corresponds to memory 38 shown in Figure 5.

The module MISDET receives an interrupt signal TOOTH INTERRUPT and this module is executed each time a tooth is detected. A variable TOOTH is supplied to the module DWELL and represents the position of the crankshaft to within one tooth of the transducer 16. This module MISDET compares the period between each tooth and thereby detects the missing teeth. When a missing tooth is detected, this module re-establishes the relationship between the variable TOOTH and absolute position of the crankshaft. The module MISDET also calculates the fire period and supplies this as a variable FIRE PERIOD to the modules IGNLU and SAFIRE. The module IGNLU receives a variable MAN PRESS representing manifold pressure which is indicative of the load demand. The variable MAN PRESS is derived from the output signal of transducer 31 by an analog/digital converter which forms part of microcomputer 100. The module IGNLU also calculates a variable ENG SPEED representing engine speed and supplies this to SAFIRE and DWELL.

In each of the schedules 110 and 111, the spark advance values are stored as a 16 X 16 array. In each array, the abscissa and ordinate correspond respectively to engine speed and load demand and the abscissa and ordinate are divided respectively into 16 discrete engine speed and load demand values. Thus, each array point contains the spark advance value for one of the discrete engine speed and one of the discrete load demand values.

In order to address the schedules 110 and 111, the module IGNLU generates address variables SPEED INDEX and LOAD INDEX corresponding respectively to engine speed and load demand. Each of these address variables can assume any one of values 0 to 15 corresponding to the lower 16 discrete engine speed and load demand values. These variables are set to the value corresponding to the engine speed and load demand immediately below the prevailing speed and load demand. The address variables SPEED INDEX and LOAD INDEX are supplied to the sub modules LOOK UP, MAP STORE, and LOOK UP CORRECTION.

The module IGNLU also calculates four variables MAP INT 0 to 3 which represent the four weighting factors described above. The four variables MAP INT 0 to 3 correspond respectively to the four addresses (SPEED INDEX, LOAD INDEX), (SPEED INDEX + 1, LOAD INDEX), (SPEED INDEX, LOAD INDEX + 1), (SPEED INDEX + 1, LOAD INDEX + 1).

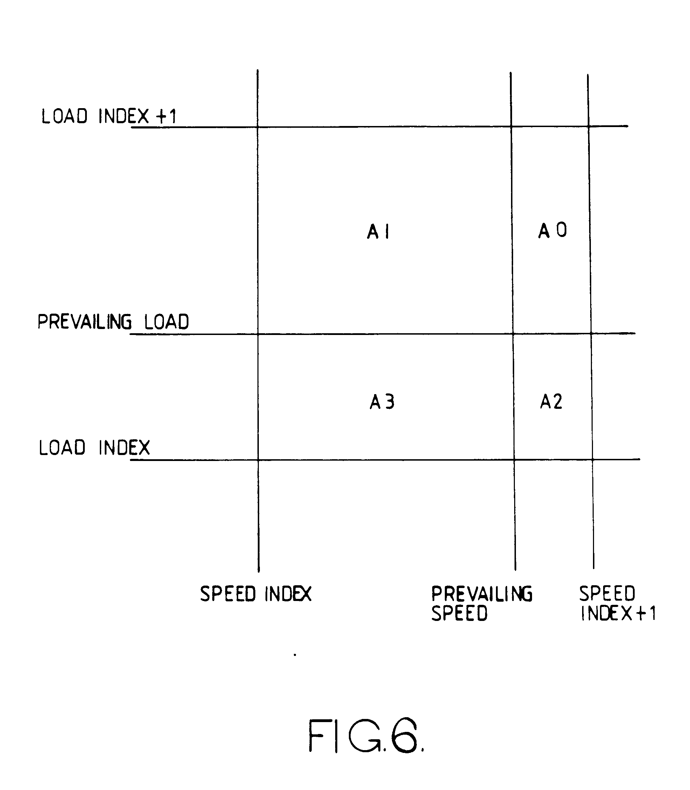

The method of calculating the weighting factors MAP INT 0 to 3 for the prevailing speed and load is shown in Figure 6. A main rectangle is formed in the speed/load plane, the corners of the rectangle lying at addresses (SPEED INDEX, LOAD INDEX), (SPEED INDEX + 1, LOAD INDEX), (SPEED INDEX, LOAD INDEX + 1), (SPEED INDEX + 1, LOAD INDEX + 1). This main rectangle is divided into four sub-rectangles by drawing the abscissa and ordinate passing through the prevailing speed and load demand, these sub-rectangles having areas A0, A1, A2, A3. The weighting factor for each of the four array points is calculated by dividing the area of the sub-rectangle diagonally opposite the array point by the area of the main rectangle. Thus, the weighting factors MAP INT 0 to 3 have the following values:-

MAP INT 0 = A0/A
MAP INT 1 = A1/A
MAP INT 2 = A2/A
MAP INT 3 = A3/A

where A = A0 + A1 + A2 + A3.

The module IGNLU calls the sub module LOOK UP which calculates the basic spark advance angle as a variable SPK ANG BASE by the interpolation process which has been described above. The module IGNLU then supplies the variable SPK ANG BASE to the module SAFIRE.

The module IGNLU is executed after each ignition spark and the module SAFIRE is executed after module IGNLU.

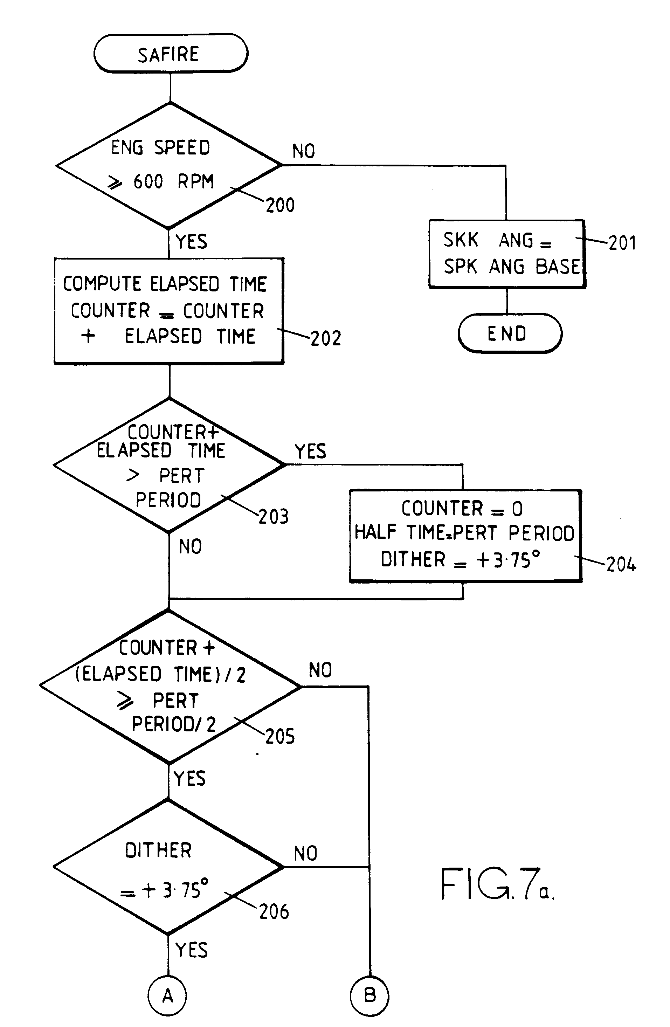

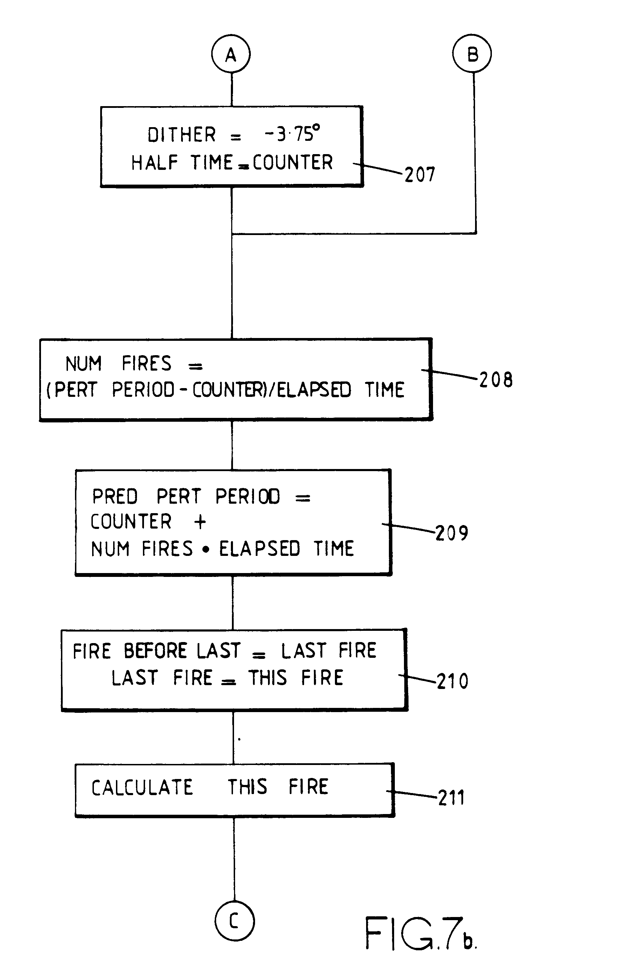

The module SAFIRE generates the perturbation waveform, determines each perturbation to the spark advance angle, determines the positive and negative measurement windows and accumulates the fire periods occurring in these windows, and calculates the slope of engine output with respect to spark advance. This module uses the slope measurement to update the spark advance correction schedule and retrieves a correction value to the spark advance from this schedule. This module also sums the basic spark advance value SPK ANG BASE with the perturbation value and the calculated correction value to produce a spark command value SPK ANG for the spark advance angle and supplies this to the module DWELL. This module will now be described with reference to the flow chart shown in Figure 7.

In the present example, the lowest perturbation frequency is 10 Hz. As a four cylinder engine has two engine fires for each revolution of the crankshaft, and as it is necessary to produce a minimum of two perturbations for each perturbation cycle, the perturbations can only be used when the engine speed is greater than or equal to 600 RPM. Thus, after entering the module SAFIRE, in a step 200, a variable ENG SPEED representing engine speed is examined. If the engine speed is less than 600 RPM, in a step 201 SPK ANG is set to SPK ANG BASE. If the engine speed is equal to or greater than 600 RPM, in a step 202 a variable ELAPSED TIME is computed. This variable represents the time which has elapsed since the previous execution of this module and is approximately equal to the fire period. It is computed from the output of an internal clock in the microcomputer 100. A variable COUNTER is then incremented by ELAPSED TIME. The variable COUNTER represents the time which has elapsed since the beginning of the present perturbation cycle.

In a step 203, the sum of COUNTER and ELAPSED TIME is compared with a constant PERT PERIOD. The constant PERT PERIOD represents the minimum period of each cycle of the perturbation waveform and, as the minimum frequncy is 10 Hz, this constant has a value of 100 ms. If the sum is greater than PERT PERIOD, this means that it is not possible to fit a further engine fire into the present cycle. Consequently, a new cycle must commence. In order to achieve this, in a step 204, COUNTER is reset to zero. Also, a variable HALF TIME is set to PERT PERIOD and a variable DITHER is set to + 3.75°. The variable HALF TIME usually indicates the duration of the first part of each cycle. However, for a reason which will be explained below, it is set to PERT PERIOD at this stage . DITHER represents the perturbation value.

In a step 205, the condition COUNTER plus ELAPSED TIME/2 ≧ PERT PERIOD/2 is checked. In a step 206, the condition DITHER = + 3.75° is checked. The conditions of steps 205 and 206 jointly define the transition point between the first and second parts of the cycle. It is to be noted that the transition will occur approximately half wave through each cycle.

If the conditions in steps 205 and 206 are satisfied, the second part of the cycle commences. In order to achieve this, in a step 207, DITHER is set to -3.75° so as to provide a negative perturbation and HALF TIME is set to COUNTER. Thus, the duration of the first part of the cycle is now stored in HALF TIME.

In a step 208, a variable NUM FIRES which represents a prediction of the whole number of engine fires which can be achieved in the remaining part of the present perturbation waveform is computed. In order to do this, (PERT PERIOD - COUNTER) is divided by ELAPSED TIME and the result is truncated to an integer. In a step 209, a variable PRED PERT PERIOD is computed and this variable represents an estimate of the period of the present cycle of the perturbation waveform.

As mentioned above, the present execution of the module SAFIRE occurs between ignition sparks. The perturbation to the spark advance angle which is calculated during the present execution of this module cannot take effect until the next ignition spark. Also, the value of the variable FIRE PERIOD which is available for the present execution of this module relates to the previous fire period. The perturbation to the spark advance angle for the spark which occurred at the beginning of this fire period was calculated during the last but one execution of this module. In using the presently available value of FIRE PERIOD to calculate the slope, it must be determined whether the central point of the fire period occurred in a positive or negative measurement window. In order to do this, this module uses three variables THIS FIRE, LAST FIRE, and FIRE BEFORE LAST. The values of these variables determine respectively whether the fire period following the next ignition spark, the fire period following the immediately preceding ignition spark, and the fire period following the previous but one ignition spark occurred in a positive or negative measurement window. Each of these variables can take one of four values and these are FIRST POS, REST OF POS, FIRST NEG, and REST OF NEG. These four values indicate respectively that a fire period is the first fire period in a positive measurement window, one of the remaining fire periods in a positive measurement window, the first fire period in a negative measurement window, and one of the remaining fire periods in a negative measurement window.

During each execution of this module, the values of these four variables must be updated and, in step 210, the variables FIRE BEFORE LAST and LAST FIRE are updated by setting them respectively to the presently held values of the variables LAST FIRE and THIS FIRE.

In a step 211 a new value for the variable THIS FIRE is calculated. As may be recalled, this refers to the fire period following the next ignition spark. In order to do this, the following comparison is first made:

0.2 (PRED PERT PERIOD) ≤ COUNTER + 0.5 (FIRE PERIOD) < 0.2 (PRED PERT PERIOD) + HALF TIME

COUNTER + 0.5 (FIRE PERIOD) defines the central point of the next fire period. In the present example, the positive and negative measurement windows follow the first and second parts of the period of each perturbation cycle by 72°. Thus, 0.2 (PRED PERT PERIOD) and 0.2 (PRED PERT PERIOD) + HALF TIME define the beginning and end of the positive measurement window.

If the result of this comparison is yes, this means that the central point of the next fire period will fall in the positive measurement window. The variable LAST FIRE is examined and the variable THIS FIRE is set to FIRST POS OR REST OF POS as is appropriate. If the result of the comparison is no, this means that the central point of the next fire period will fall in a negative measurement window and THIS FIRE is set to FIRST NEG or REST OF NEG.

As mentioned above HALF TIME is set to PERT PERIOD during the first part of each period. Without doing this, HALF TIME would be set to the duration of the first part of the previous cycle. Under rapid deceleration, there is a danger that the next engine fire could be judged incorrectly to be in a negative measurement window. By setting HALF TIME to PERT PERIOD this danger is avoided.

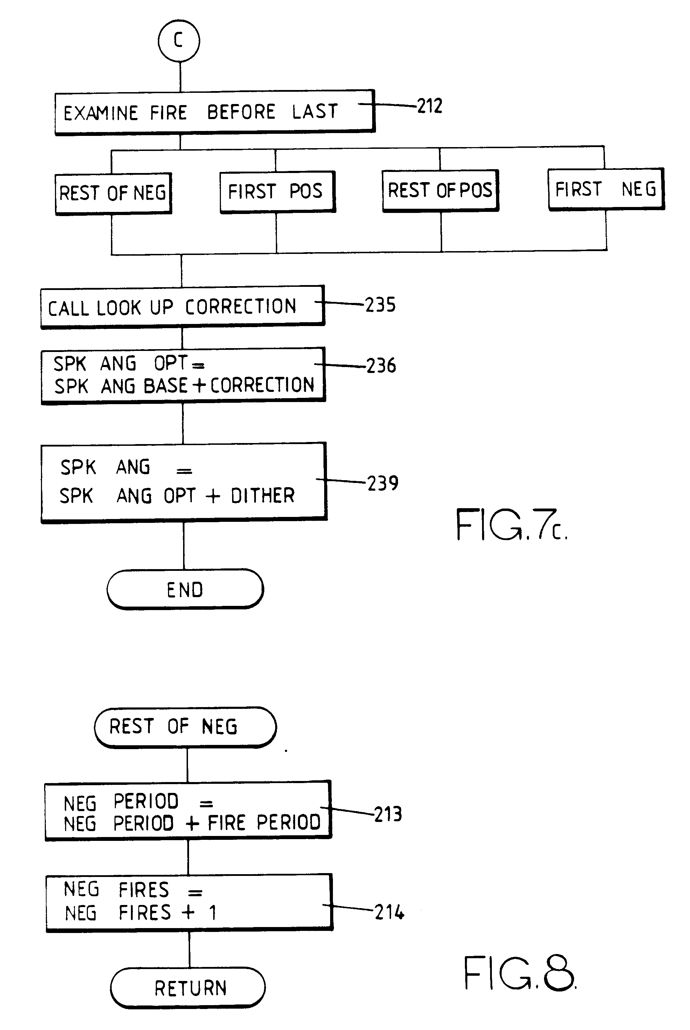

Next, in a step 212, the variable FIRE BEFORE LAST is examined. Depending upon the value of this variable, one of the sub routines REST OF NEG, FIRST POS, REST OF POS, and FIRST NEG is performed and these sub routines are shown respectively in Figures 8, 9, 10, and 11.

As shown in Figure 8, if FIRE BEFORE LAST has a value REST OF NEG, in a step 213 a variable NEG PERIOD which represents the accumulated value of the fire period in the negative measurement window is incremented by the present value of FIRE PERIOD. Then, in a step 214, a variable NEG FIRES which represent the number of ignition sparks in the negative measurement window is incremented.

As shown in Figure 9, when FIRE BEFORE LAST has a value FIRST POS, in a step 215, a variable NEG SPEED is calculated. This variable represents the average engine speed during the negative measurement window and it is calculated by dividing NEG FIRES by NEG PERIOD and multiplying the result by a constant CONST. Then, in a step 216, a variable SIGNAL FIRST is calculated by subtracting NEG SPEED from a variable POS SPEED. The variable POS SPEED represents the average speed in the positive measurement window and variable SIGNAL FIRST represents the change in engine speed which is caused by the change in perturbation to the spark advance angle between the first and second parts of the perturbation waveform. Then, in a step 217, a variable POS FIRES which represents the number of engine fires in the positive measurement window is set to 1. In a step 218, a variable POS PERIOD which represents the accumulated fire periods in the positive measurement window is set to the present value of FIRE PERIOD.

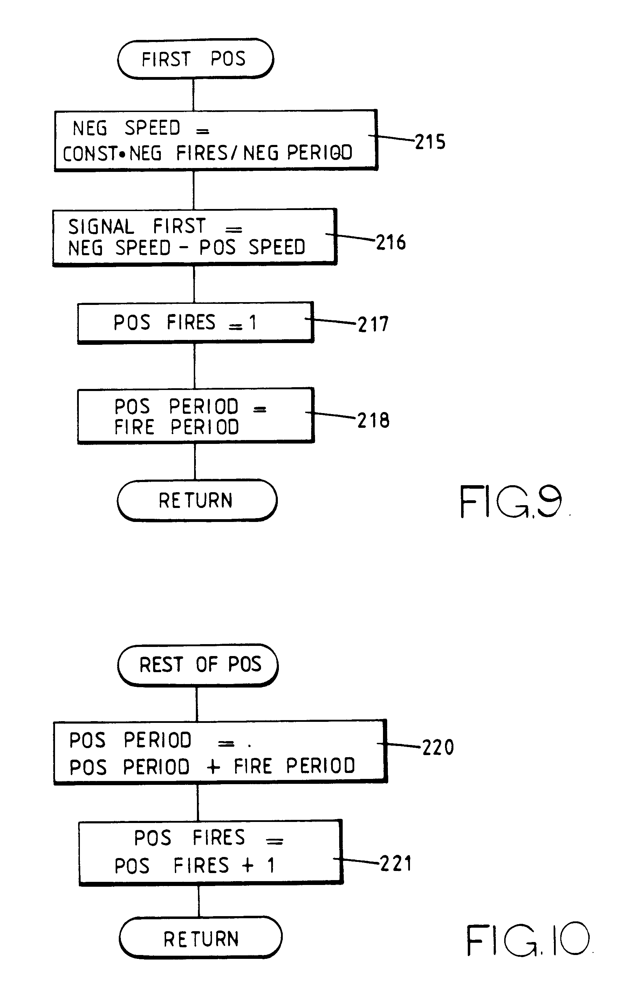

As shown in Figure 10, when FIRE BEFORE LAST has a value REST OF POS, in a step 220, POS PERIOD is incremented by the present value of FIRE PERIOD. Then, in a step 221, POS FIRES is incremented.

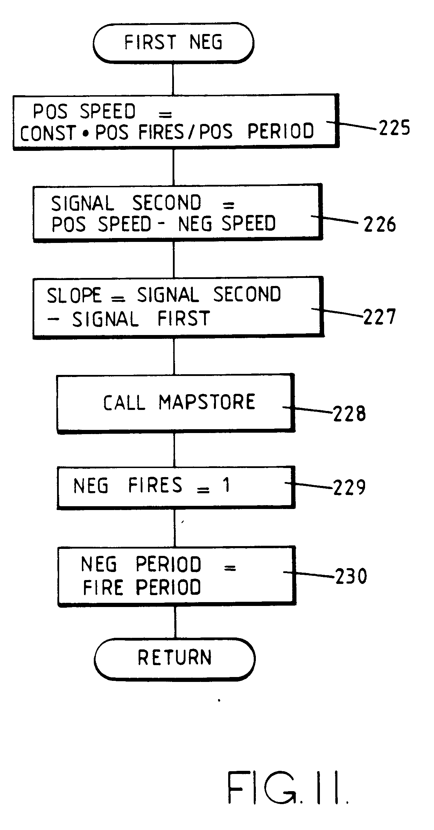

As shown in Figure 11, when FIRE BEFORE LAST has a value FIRST NEG, in a step 225, the variable POS SPEED is evaluated by dividing POS FIRES by POS PERIOD and multiplying the result by CONST. Then, in a step 226, a variable SIGNAL SECOND is evaluated by subtracting NEG SPEED from POS SPEED. The variable SIGNAL SECOND represents the change in engine speed which is caused by the change in perturbation value from the second part of one perturbation waveform to the first part of the next perturbation waveform. In a step 227, a variable SLOPE which represents the slope of engine output with respect to spark advance is evaluated by subtracting SIGNAL FIRST from SIGNAL SECOND. By evaluating the slope in this manner, as mentioned above with reference to Figure 1, changes in engine speed which are caused by rapid acceleration or deceleration of the engine are eliminated. The magnitude of SLOPE is limited to a preset maximum value.

In a step 228, the sub module MAP STORE is called. This module uses the recently calculated value of SLOPE together with the values of MAP INT 0 to 3, SPEED INDEX and LOAD INDEX, which it receives from module IGNLU, to update the spark advance correction schedule 111. This is performed in a manner described with reference to figure 1.

Next, in a step 229, the variable NEG FIRES is set to 1 and in a step 230 the variable NEG PERIOD is set to the present value of FIRE PERIOD.

Returning now to Figure 7, after one of the sub routines has been performed, in a step 235, the sub module LOOK UP CORRECTION is called. This sub module calculates a variable CORRECTION which represents the appropriate correction to the spark advance angle from the values stored in the spark advance correction schedule. This variable is calculated by the interpolation method described with reference to Figure 1.

Next, in a step 236, a variable SPK ANG OPT is calculated as the sum of SPK ANG BASE and CORRECTION. SPK ANG OPT represents the optimum spark advance angle for the prevailing engine speed and load demand.

In a step 239, the variable SPK ANG, which represents the command value of the spark advance angle, is calculated as the sum of SPK ANG OPT and a constant DITHER. Thus, either a positive or negative perturbation corresponding to 3.75° of crankshaft is imposed on the optimum spark advance angle.

Returning to Figure 5, the routine DWELL uses variables TOOTH, ENG SPEED and SPK ANG to calculate a variable COIL DRIVE which controls the generation of each spark. Specifically, COIL DRIVE causes the HIGH SPEED output of microcomputer 100 to go low when the engine crankshaft passes the commanded spark advance position and to go high early enough to allow the primary current in the ignition coil to reach the required value.

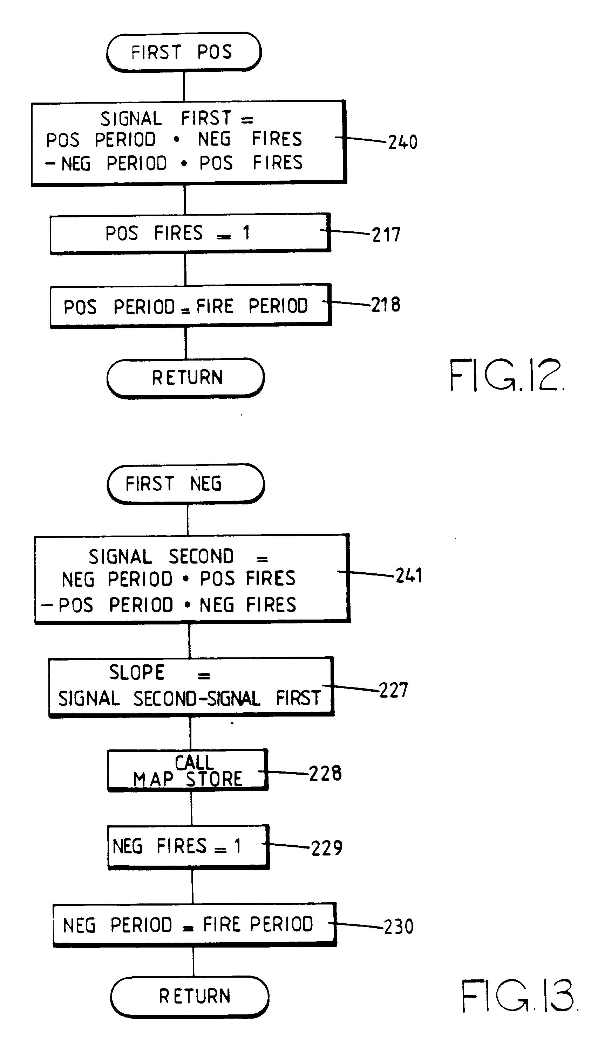

In the program module SAFIRE which has been described with reference to Figures 7 to 11, step 215 of the sub routine FIRST POS and step 225 of sub routine FIRST NEG involve a division which requires a substantial amount of computing time. There will now be described with reference to Figures 12 and 13 a modification to these two sub routines which avoids this division.

The small changes in engine speed which occur between the positive and negative measurement windows are proportional to minus the change in the average engine fire period during the two windows. Thus, an indication in the change of speed could be obtained by calculating the change in the average fire period. However, the constant of proportionality increases with the square of the engine speed and so the sensitivity using this method would fall rapidly with increasing engine speed. Consequently, at high engine speeds, the correction schedule would be updated too slowly whilst there could be instability at low engine speeds.

This variation in sensitivity may be avoided by multiplying the change in average fire period by the square of the engine speed. The square of the engine speed is approximately proportional to the product of the number of fires occuring in the first half period and the numbers of fires occuring in the second half period of each cycle of the perturbation waveform. Thus, the change in engine speed between a positive measurement window and a negative measurement window may be expressed as follows:-

$$\text{Change in speed} = k \cdot n^- n^+ (T^+/n^+ - T^-/n^-)$$

where k is a constant, $n^+$ and $n^-$ are the number of engine fires occurring respectively in the positive and negative measurement windows, and $T^+$ and $T^-$ are the accumulated fire periods for these windows and so $T^+/n^+$ and $T^-/n^-$ are respective average fire periods.

This expression, simplified by cancellation of the denominator terms, together with a similar expression for the transition from a negative measurement window to a positive measurement window is used in the modification shown in Figures 12 and 13. In these Figures, like steps are denoted by the same reference numerals.

Referring now to Figure 12, in the sub routine FIRST POS, the steps 215 and 216 of Figure 9 are replaced by a new step 240. In the step 240, the variable SIGNAL FIRST is calculated as the difference between the product of variables POS PERIOD and NEG FIRES and the product of the variables NEG PERIOD and POS FIRES.

In Figure 13, the steps 225 and 226 of Figure 11 are replaced by a new step 241. In step 241, the variable SIGNAL SECOND is calculated as a difference between the product of NEG PERIOD and POS FIRES and the product of POS PERIOD and NEG FIRES.

As may be seen, steps 240 and steps 241 do not involve a division and so less computation time is required with the modification as shown in Figures 12 and 13.

Although the above example describes applying perturbations to the spark advance angle in a spark ignition engine in order to obtain corrections to this parameter, the present invention is not limited to this application. For example, it could also be used to apply perturbations to the timing of fuel injection in either petrol or diesel engines so as to provide corrections for this parameter. Also, in both petrol and diesel engines, the air/fuel ratio is established in accordance with a predetermined schedule. The present invention could be used to apply perturbations to this ratio so as to obtain corrections to this parameter. In some diesel and in some petrol engines, exhaust gases are mixed with engine intake air in a predetermined ratio. The present invention could be used to apply perturbations to this ratio so as to obtain a correction for this parameter.

In the example described above, the spark advance angle is perturbed and this same parameter is corrected in accordance with the slope measurements. However, it is within the present invention to perturb one parameter and correct another parameter. For example, the spark advance could be perturbed and the slope measurements used to correct values in a schedule for the air/fuel ratio.

In the system discussed with reference to Figures 4 to 13, there are provided a fixed spark advance schedule 110 and a spark advance correction schedule 111. By way of modification there may be provided a single spark advance schedule which is initially provided with the fixed values. The values would then be updated in accordance with the slope measurement.

In another modification, a single memory location is provided for entire speed/load plane in place of the schedule 111.

## Claims

1. An adaptive control system for an internal combustion engine (10) having a flywheel (10) connected through resilient shafting (12, 14) and a gear arrangement (13) to a load (15), said flywheel (11), resilient shafting (12, 14) and gear arrangement (13) forming a resonant system which has a particular resonant frequency for each gear ratio established by said gear arrangement, said control system comprising: means (36, 37) for determining a basic value for an engine control parameter (hereinafter referred to as "said perturbed parameter"); a position transducer (16) for detecting the passage of the engine crankshaft past at least one reference point during each engine fire period; characterised in that said system further comprises a perturbation generator (40) for perturbing said perturbed parameter about said basic value, said perturbation generator (40) generating a periodic perturbation waveform and applying a positive perturbation to said perturbed parameter during a first part of each period of the perturbation waveform and a negative perturbation to said perturbed parameter during a second part of each period of the perturbation waveform, each period of said waveform being equal to a whole number of engine fire periods and the frequency of said waveform being greater than three quarters of the highest resonant frequency of said resonant system; means (43) for creating at least one series of contiguous positive and negative measurement windows associated respectively with first and second parts of said perturbation waveform, each measurement window lagging its respective part of the perturbation waveform by a predetermined phase shift; means (46) for calculating the slope of engine output torque with respect to said perturbed parameter, said calculating means (46) calculating said slope from the change in engine speed between adjacent measurement windows; and means (47) for using said slope to apply a correction to at least one engine control parameter (each of which is hereinafter referred as "a corrected parameter").

2. An adaptive control system as claimed in Claim 1, characterised in that said system further includes a first accumulator (44) for accumulating for each positive measurement window the fire periods whose central points fall within said positive window to produce a total fire period for said positive window; and a second accumulator (45) for accumulating for each negative measurement window the individual fire periods whose central points fall within said negative window to produce a total fire period for said negative window; said calculating means (46) calculating said slope from said total fire periods accumulated in said first and second accumulators (44, 45).

3. An adaptive control system as claimed in Claim 2, characterised in that said slope calculating means (46) calculates the average engine speed during each positive measurement window by dividing the number of engine fires occurring during said window by the total fire period accumulated in said first accumulator (44), calculating the average engine speed during each negative measurement window by dividing the number of engine fires occurring in said negative window by the total fire period accumulated in said second accumulator (45), and calculating each slope value by subtracting the average engine speed occurring in a positive window from the average speed occurring in the subsequent negative window to obtain a first transition value, subtracting the average engine speed occurring in a negative window from the average speed occurring in a subsequent positive window to obtain a second transition value, and subtracting the first transition value from the second transition value to obtain said slope value.

4. An adaptive control system as claimed in Claim 2, characterised in that said slope calculating means (46) calculates each slope value by subtracting the product of the number of engine fires occurring in one positive window and the total fire period occurring in a subsequent negative window from the product of the total number of fires occurring in said subsequent negative window and the total fire period occurring in said one positive window to produce a first difference value, subtracting the product of the number of engine fires occurring in one negative window and the total fire period for a subsequent positive window from the product of the total number of fires occurring in said subsequent positive window and the total fire period occurring in said one negative window to produce a second difference value, and subtracting said first difference value from said second difference value to produce said slope value.

5. An adaptive control system as claimed in any one of the preceding claims, characterised in that said correction means (47) compares each slope value with a reference value to determine a difference value, integrates said difference values to obtain an average value, and uses said average value to correct at least one corrected parameter.

6. An adaptive control system as claimed in any one of the preceding claims, characterised in that the system includes means (30) for determining the engine speed, and means (31) for determining the load demand to which the engine is subjected, and basic values for said perturbed parameter are stored in a schedule (35) as a function of engine speed and load demand.

7. An adaptive control system as claimed in Claim 6, characterised in that the basic values for said perturbed parameter are stored in said schedule (35) as a two dimensional array as a function of engine speed and load demand, and each basic value of said perturbed parameter is determined from the values stored at the four array points in the speed/load plane which surround the prevailing speed and load, said perturbed parameter at each point being multiplied by a respective weighting factor to form a product value and the four resulting product values being summed to produce the basic value, said weighting values being determined by forming a main rectangle whose corners lie on said four array points, dividing said main rectangle into four sub-rectangles by the abscissa and ordinate which pass through the prevailing engine speed and load demand point, and calculating the weighting factor for each array point by dividing the area of the diagonally opposite sub-rectangle by the area of the main rectangle.

8. An adaptive control system as claimed in any one of the preceding claims, characterised in that said perturbed parameter is an ignition timing parameter.

9. An adaptive control system as claimed in Claim 8, characterised in that there is a single corrected parameter and both said perturbed parameter and the corrected parameter are an ignition timing parameter.

10. A method of controlling an internal combustion engine, said engine having a flywheel connected through resilient shafting and a gear arrangement to a load, said flywheel, resilient shafting and gear arrangement forming a resonant system which has a particular resonant frequency for each gear ratio established by said gear arrangement, characterised in that said method comprises: perturbing an engine control parameter (hereinafter referred to as "said perturbed parameter") by generating a periodic perturbation waveform, applying a positive perturbation to said perturbed parameter during a first part of each period of the perturbation waveform and a negative perturbation to said perturbed parameter during a second part of each period of the perturbation waveform, each period of said waveform being equal to a whole number of engine fire periods and the frequency of said waveform being greater than three quarters of the highest resonant frequency of said resonant system; creating at least one series of contiguous positive and negative measurement windows associated respectively with first and second parts of said perturbation waveform, each measurement window lagging its respective part of the perturbation waveform by a predetermined phase shift; calculating the slope of engine output torque with respect to said perturbed parameter from the change in engine speed between adjacent measurement windows; and using said slope to apply a correction to at least one engine control parameter (each of which is hereinafter referred to as "a corrected parameter").

11. A method of controlling an adaptive internal combustion engine as claimed in Claim 10, characterised in that said method further includes accumulating for each positive measurement window fire periods whose central points fall within said positive window, accumulating for each negative measurement window the individual fire periods whose central points fall within said negative window, and calculating said slope from said total fire perios accumulating in said total fire periods for adjacent measurement windows.

12. A method of controlling an internal combustion engine as claimed in Claim 11, characterised in that said slope is calculated in accordance with the following steps: (1) calculating an average engine speed during each measurement window by dividing the number of fires occurring in that window by the total fire period accumulated in that window, and (2) calculating each slope value by subtracting the average engine speed occurring in a positive window from the average speed occurring in the subsequent negative window to obtain a first transition value, subtracting the average engine speed occurring in a negative window from the average engine speed occurring in a subsequent positive window to obtain a second transition value, and subtracting the first transition value from the second transition value to obtain said slope value.

13. A method of controlling an internal combustion engine as claimed in Claim 11, characterised in that each slope value is calculated by subtracting the product of the number of engine fires occurring in one positive window and the total fire period occurring in a subsequent negative window from the product of the total number of fires occurring in said subsequent negative window and the total fire period occurring in said one positive window to produce a first difference value, subtracting the product of the number of engine fires occurring in one negative window and the total fire period for a subsequent positive window from the product of the total number of fires occurring in said subsequent positive window and the total fire period occurring in said one negative window to produce a second difference value, and subtracting said first difference value from said second difference value to produce said slope value.

14. A method of controlling an internal combustion engine as claimed in any one of Claims 11 to 13, characterised in that said perturbed parameter is an ignition timing parameter.

15. A method of controlling an internal combustion engine as claimed in Claim 14, characterised in that there is a single corrected parameter and both said perturbed parameter and the corrected parameter are an ignition timing parameter.

**Revendications**

1. Système de commande adaptative pour un moteur à combustion interne (10), muni d'un volant (11) relié par l'intermédiaire d'une transmission résiliente (12, 14) et d'un arrangement d'engrenages (13) à une charge (15), ledit volant (11), ladite transmission résiliente (12, 14) et ledit arrangement d'engrenages (13) formant un système résonant qui possède une fréquence de résonance particulière pour chaque rapport d'engrenage établi par ledit arrangement d'engrenages, ledit système de commande comprenant : un moyen (36, 37) pour déterminer une valeur de base pour un paramètre de réglage de moteur (désigné ci-après par l'expression "ledit paramètre perturbé"); un transducteur de position (16) pour détecter le passage du vilebrequin du moteur au-delà d'au moins un point de référence au cours de chaque période d'allumage du moteur; caractérisé en ce que ledit système comprend, en outre, un générateur de perturbations (40) pour perturber ledit paramètre perturbé autour de ladite valeur de base, ledit générateur de perturbations (40) générant une onde périodique de perturbation et appliquant une perturbation positive audit paramètre perturbé au cours d'une première partie de chaque période de l'onde de perturbation et une perturbation négative audit paramètre de perturbation au cours d'une seconde partie de chaque période de l'onde de perturbation, chaque période de ladite onde étant égale à un nombre entier de périodes d'allumage du moteur et la fréquence de ladite onde étant supérieure aux trois quarts de la fréquence de résonance la plus élevée dudit système résonant; un moyen (43) pour créer au moins une série de fenêtres contiguës de mesure positive et négative, associées respectivement aux première et seconde parties de ladite onde de perturbation, chaque fenêtre de mesure étant décalée par rapport à sa partie respective de l'onde de perturbation d'un déphasage prédéterminé; un moyen (46) pour calculer la pente du couple de la puissance du moteur par rapport audit paramètre perturbé, ledit moyen de calcul (46) calculant ladite pente à partir du changement quant à la vitesse du moteur intervenant entre des fenêtres de mesure adjacentes; ainsi qu'un moyen (47) pour utiliser ladite pente dans le but d'appliquer une correction à au moins un paramètre de réglage du moteur (chacun de ces derniers étant désigné ci-après par l'expression "paramètre corrigé").

2. Système de commande adaptative selon la revendication 1, caractérisé en ce que ledit système englobe, en outre, un premier accumulateur (44) pour accumuler, pour chaque fenêtre de mesure positive, les périodes d'allumage dont les points centraux tombent à l'intérieur de ladite fenêtre positive pour procurer une période d'allumage totale pour ladite fenêtre positive; ainsi qu'un second accumulateur (45) pour accumuler, pour chaque fenêtre de mesure négative, les périodes d'allumage individuelles dont les points centraux tombent à l'intérieur de ladite fenêtre négative pour procurer une période d'allumage totale pour ladite fenêtre négative; ledit moyen de calcul (46) calculant ladite pente à partir desdites périodes d'allumage totales accumulées dans lesdits premier et second accumulateurs (44, 45).

3. Système de commande adaptative selon la revendication 2, caractérisé en ce que ledit moyen de calcul de pente (46) calcule la vitesse moyenne du moteur au cours de chaque fenêtre de mesure positive en divisant le nombre d'allumages du moteur apparaissant au cours de ladite fenêtre par la période d'allumage totale accumulée dans ledit premier accumulateur (44), en calculant la vitesse moyenne du moteur au cours de chaque fenêtre de mesure négative en divisant le nombre des allumages du moteur apparaissant dans ladite fenêtre négative par la période d'allumage totale accumulée dans ledit second accumulateur (45) et en calculant chaque valeur de pente en soustrayant la vitesse moyenne du moteur apparaissant dans une fenêtre positive de la vitesse moyenne apparaissant dans la fenêtre négative suivante pour obtenir un première valeur de transition, en soustrayant la vitesse moyenne du moteur apparaissant dans une fenêtre négative de la vitesse moyenne apparaissant dans une fenêtre positive suivante pour obtenir une seconde valeur de transition, et en soustrayant la première valeur de transition de la seconde valeur de transition pour obtenir ladite valeur de pente.

4. Système de commande adaptative selon la revendication 2, caractérisé en ce que ledit moyen de calcul de pente (46) calcule chaque valeur de pente en soustrayant le produit du nombre d'allumages de moteur apparaissant dans une fenêtre positive et de la période d'allumage totale apparaissant dans une fenêtre négative suivante du produit du nombre total d'allumages apparaissant dans ladite fenêtre négative suivante et de la période d'allumage totale apparaissant dans ladite première fenêtre positive pour obtenir une première valeur de différence, en soustrayant le produit du nombre d'allumages de moteur apparaissant dans une fenêtre négative et de la période d'allumage totale pour une fenêtre positive suivante du produit du nombre total d'allumages apparaissant dans ladite fenêtre positive suivante et de la période d'allumage totale apparaissant dans ladite première fenêtre négative pour obtenir une seconde valeur de différence, et en soustrayant ladite première valeur de différence de ladite seconde valeur de différence pour obtenir ladite valeur de pente.

5. Système de commande adaptative selon l'une quelconque des revendications précédentes, caractérisé en ce que ledit moyen de correction (47) compare chaque valeur de pente à une valeur de référence pour déterminer une valeur de différence, intègre lesdites valeurs de différence pour obtenir une valeur moyenne et utilise ladite valeur moyenne pour corriger au moins un paramètre corrigé.

6. Système de commande adaptative selon l'une quelconque des revendications précédentes, caractérisé en ce que le système englobe un moyen (30) destiné à déterminer la vitesse du moteur, ainsi qu'un moyen (31) destiné à déterminer la demande de charge à laquelle le moteur est soumis, et les valeurs de base sont mémorisées pour ledit paramètre perturbé dans un programme (35) en fonction de la vitesse du moteur et de la demande de charge.

7. Système de commande adaptative selon la revendication 6, caractérisé en ce qu'on mémorise les valeurs de base pour ledit paramètre perturbé dans ledit programme (35) sous forme d'une zone à deux dimensions en fonction de la vitesse du moteur et de la demande de charge, et on détermine chaque valeur de base dudit paramètre perturbé à partir des valeurs mémorisées aux quatre points de la zone dans le plan vitesse/charge, qui entourent la demande et la charge en vigueur, ledit paramètre perturbé à chaque point étant multiplié par un facteur de pondération respectif pour obtenir une valeur de produit et les quatre valeurs de produit résultantes étant additionnées pour obtenir la valeur de base, lesdites valeurs de pondération étant déterminées en formant un rectangle principal dont les coins se situent auxdits quatre points de zone, en divisant ledit rectangle principal en quatre sous-rectangles par l'abscisse et l'ordonnée qui passent par le point de la vitesse du moteur et de la demande de charge en vigueur, et en calculant le facteur de pondération pour chaque point de zone, en divisant la surface du sous-rectangle diagonalement opposé par la surface du rectangle principal.

8. Système de commande adaptative selon l'une quelconque des revendications précédentes, caractérisé en ce que ledit paramètre perturbé est un paramètre de réglage d'injection.

9. Système de commande adaptative selon la revendication 8, caractérisé en ce qu'il existe un seul paramètre corrigé et, à la fois, ledit paramètre perturbé et le paramètre corrigé concernent un paramètre de réglage d'injection.

10. Procédé de réglage d'un moteur à combustion interne, ledit moteur comprenant un volant relié par l'intermédiaire d'une transmission résiliente et d'un arrangement d'engrenages à une charge, ledit volant, ladite transmission résiliente et ledit arrangement d'engrenages formant un système résonant qui possède une fréquence de résonance particulière pour chaque rapport d'engrenage établi par ledit arrangement d'engrenages, caractérisé en ce que ledit procédé comprend : le fait de perturber un paramètre de réglage de moteur (désigné ci-après par l'expression "ledit paramètre perturbé") en générant une onde périodique de perturbation, le fait d'appliquer une perturbation positive audit paramètre perturbé au cours d'une première partie de chaque période de l'onde de perturbation et une perturbation négative audit paramètre perturbé au cours d'une seconde partie de chaque période de l'onde de perturbation, chaque période de ladite onde étant égale à un nombre entier de périodes d'allumage de moteur et la fréquence de ladite onde étant supérieure aux trois quart de la fréquence de résonance la plus élevée dudit système résonant; le fait de créer au moins une série de fenêtres de mesure positive et négative contiguës associées respectivement aux premières et secondes parties de ladite onde de perturbation, chaque fenêtre de mesure étant décalée par rapport à sa partie respective de l'onde de perturbation d'un déphasage prédéterminé; le fait de calculer la pente du couple de la puissance du moteur par rapport audit paramètre perturbé à partir du changement quant à la vitesse du moteur intervenant entre deux fenêtres de mesure adjacentes; et le fait d'utiliser ladite pente pour appliquer une correction à au moins un paramètre de réglage de moteur (chacun de ces derniers étant désigné ci-après par l'expression "paramètre corrigé").

11. Procédé de réglage d'un moteur adaptatif à combustion interne selon la revendication 10, caractérisé en ce que ledit procédé englobe, en outre, le fait d'accumuler, pour chaque fenêtre de mesure positive, des périodes d'allumage dont les points centraux tombent à l'intérieur de ladite fenêtre positive, le fait d'accumuler, pour chaque fenêtre de mesure négative, les périodes d'allumage individuelles dont les points centraux tombent à l'intérieur de ladite fenêtre négative, et le fait de calculer ladite pente à partir desdites périodes d'allumage totales s'accumulant dans lesdits accumulateurs pour des fenêtres de mesure adjacentes.

12. Procédé de réglage d'un moteur à combustion interne selon la revendication 11, caractérisé en ce qu'on calcule ladite pente conformément aux étapes suivantes: (1) on calcule une vitesse moyenne du moteur au cours de chaque fenêtre de mesure en divisant le nombre d'allumages apparaissant dans cette fenêtre par la période d'allumage totale accumulée dans cette fenêtre et (2) on calcule chaque valeur de pente en soustrayant la vitesse moyenne de moteur apparaissant dans une fenêtre positive de la vitesse moyenne apparaissant dans la fenêtre négative suivante pour obtenir une première valeur de transition, on soustrait la vitesse moyenne du moteur apparaissant dans une fenêtre négative de la vitesse moyenne du moteur apparaissant dans une fenêtre positive suivante pour obtenir une seconde valeur de transition, et on soustrait la première valeur de transition de la seconde valeur de transition pour obtenir ladite valeur de pente.

13. Procédé de réglage d'un moteur à combustion interne selon la revendication 11, caractérisé en ce qu'on calcule chaque valeur de pente en soustrayant le produit du nombre d'allumages de moteur apparaissant dans une fenêtre positive et de la période d'allumage totale apparaissant dans une fenêtre négative suivante du produit du nombre total d'allumages apparaissant dans ladite fenêtre négative suivante et de la période d'allumage totale apparaissant dans ladite première fenêtre positive pour obtenir une première valeur de différence, en soustrayant le produit du nombre d'allumages de moteur apparaissant dans la première fenêtre négative et de la période d'allumage totale pour une fenêtre positive suivante du produit du nombre total d'allumages apparaissant dans ladite fenêtre positive suivante et de la période d'allumage totale apparaissant dans ladite première fenêtre négative pour obtenir une seconde valeur de différence, et en soustrayant ladite première valeur de différence de ladite seconde valeur de différence pour obtenir ladite valeur de pente.

14. Procédé de réglage d'un moteur à combustion interne selon l'une quelconque des revendications 11 à 13, caractérisé en ce que ledit paramètre perturbé est un paramètre de réglage d'injection.

15. Procédé de réglage d'un moteur à combustion interne selon la revendication 14, caractérisé en ce qu'il existe un seul paramètre corrigé et, à la fois, ledit paramètre perturbé et le paramètre corrigé concernent un paramètre de réglage d'injection.

## Patentansprüche

1. Adaptives Regelsystem für einen Verbrennungsmotor (10) mit einem über federnde Wellen (12, 14) und eine Getriebeanordnung (13) mit einer Last (15) verbundenen Schwungrad (10), wobei das Schwungrad (11), die federnden Wellen (12, 14) und die Getriebeanordnung (13) ein Resonanzsystem mit einer eigenen Resonanzfrequenz für jedes durch die Getriebeanordnung aufgestellte Übersetzungsverhältnis bilden, wobei das Regelsystem eine Einrichtung (36, 37) zum Bestimmen eines Basiswertes für einen Motorregelparameter (hier im folgenden als "der gestörte Parameter" bezeichnet); einen Positionsübertrager (16) zum Nachweisen des Vorbeigehens der Motorkurbelwelle an einem Referenzpunkt während jeder Motorzündperiode aufweist; dadurch gekennzeichnet, daß das System weiter aufweist einen Störgenerator (14) zum Stören des gestörten Parameters um den Basiswert, wobei der Störungsgenerator (14) eine periodische Störwellenform erzeugt und in einem ersten Teil jeder Periode der Störwellenform eine positive Störung an den gestörten Parameter und in einem zweiten Teil jeder Periode der Störwellenform eine negative Störung an den gestörten Parameter anlegt, jede Periode der Wellenform gleich einer ganzen Zahl von Motorzündperioden ist und die Frequenz der Wellenform größer als Dreiviertel der höchsten Resonanzfrequenz des Resonanzsystems ist; eine Einrichtung (43) zum Erzeugen einer Reihe von aneinandergrenzenden positiven und negativen Meßfenstern, die mit dem ersten bzw. zweiten Teil der Störwellenform verknüpft sind, wobei jedes Meßfenster gegenüber seinem entsprechenden Teil der Störwellenform um eine vorbestimmte Phasenverschiebung verzögert ist; eine Einrichtung (46) zum Berechnen der Steigung eines Motorausgangsdrehmomentes in bezug auf den gestörten Parameter, wobei die Berechnungseinrichtung (46) die Steigung aus der Änderung der Motordrehzahl zwischen benachbarten Meßfenstern berechnet; und eine Einrichtung (47) zum Benutzen der Steigung zum Anbringen einer Korrektur an mindestens einen Motorregelparameter (von denen jeder hier im folgenden als "ein korrigierter Parameter" bezeichnet wird).

2. Adaptives Regelsystem nach Anspruch 1, dadurch gekennzeichnet, daß das System weiter aufweist einen ersten Akkumulator (44) zum Akkumulieren für jedes positive Meßfenster der Zündperioden, deren Zentralpunkte in das positive Meßfenster fallen, zum Erzeugen einer gesamten Zündperiode für das positive Fenster; und einen zweiten Akkumulator (45) zum Akkumulieren für jedes negative Meßfenster der individuellen Zündperioden, deren Zentralpunkte in das negative Fenster fallen, zum Erzeugen einer gesamten Zündperiode für das negative Meßfenster; wobei die Berechnungseinrichtungen (46) die Steigung aus den Gesamtzündperioden berechnet, die in den ersten und zweiten Akkumulator (44, 45) akkumuliert sind.

3. Adaptives Regelsystem nach Anspruch 2, dadurch gekennzeichnet, daß die Steigungsberechnungseinrichtung (44) die mittlere Motordrehzahl während jedes positiven Meßfensters durch Dividieren der Zahl von Motorzündungen, die während des Fensters auftreten, durch die Gesamtzündperiode, die in dem ersten Akkumulator (44) akkumuliert ist, berechnet, die mittlere Motordrehzahl während jedes negativen Meßfensters durch Dividieren der Zahl von Motorzündungen, die in dem negativen Fenster auftreten, durch die Gesamtzündperiode, die in dem zweiten Akkumulator (45) akkumuliert sind, berechnet und jeden Steigungswert berechnet durch Subtrahieren der mittleren Motordrehzahl, die in dem positiven Fenster auftritt, von der mittleren Drehzahl, die in dem folgenden negativen Fenster auftritt, zum Erhalten eines ersten Übergangswertes, Subtrahieren der mittleren Motordrehzahl, die während eines negativen Fensters auftritt, von der mittleren Drehzahl, die in dem folgenden positiven Fenster auftritt, zum Erhalten eines zweiten Übergangswertes und Subtrahieren des ersten Übergangswertes von dem zweiten Übergangswert zum Erhalten des Steigungswertes.

4. Adaptives Regelsystem nach Anspruch 2, dadurch gekennzeichnet, daß die Steigungsberechnungseinrichtung (46) jeden Steigungswert berechnet durch Subtrahieren des Produktes der Zahl von Motorzündungen, die in einem positiven Fenster auftreten, und der Gesamtzündperiode, die in dem darauffolgenden negativen Fenster auftritt, von dem Produkt der Gesamtzahl der Zündungen, die in dem folgenden negativen Fenster auftreten, und der Gesamtzündperiode, die in dem einen positiven Fenster auftritt, zum Erzeugen eines ersten Differenzwertes, Subtrahieren des Produktes der Zahl von Motorzündungen, die in einem negativen Fenster auftreten, und der Gesamtzündperiode für das folgende positive Fenster von dem Produkt der Gesamtzahl von Zündungen, die in dem folgenden positiven Fenster auftreten, und der Gesamtzündperiode, die in dem einen negativen Fenster auftritt, zum Erzeugen eines zweiten Differenzwertes und Subtrahieren des ersten Differenzwertes von dem zweiten Differenzwert zum Erzeugen des Steigungswertes.

5. Adaptives Regelsystem nach einem der vorhergehenden Ansprüche, dadurch gekennzeichnet, daß die Korrektureinrichtungen (47) jeden Steigungswert mit einem Referenzwert zum Bestimmen eines Differenzwertes vergleicht, den Differenzwert zum Erzielen eines mittleren Wertes integriert und den mittleren Wert zum Korrigieren von mindestens einem korrigierten Parameter benutzt.

6. Adaptives Regelsystem nach einem der vorhergehenden Ansprüche, dadurch gekennzeichnet, daß das System eine Einrichtung (30) zum Bestimmen der Motordrehzahl und eine Einrichtung (31) zum Bestimmen der Lastbeanspruchung, der der Motor ausgesetzt ist, aufweist und Basiswerte für den gestörten Parameter in dem Schema (35) als eine Funktion der Motordrehzahl und der Lastbeanspruchung gespeichert sind.

7. Adaptives Regelsystem nach Anspruch 6, dadurch gekennzeichnet, daß die Basiswerte für die gestörten Parameter in dem Schema (35) als ein zweidimensionales Feld als eine Funktion der Motordrehzahl und der Lastbeanspruchung gespeichert sind und jeder Basiswert des gestörten Parameters aus den an den vier Feldpunkten in der Dreh zahl/Lastebene bestimmt wird, die die vorliegende Geschwindigkeit und Last umgeben, wobei der gestörte Parameter an jedem Punkt mit einem entsprechenden Wichtungsfaktor zum Bilden eines Produktwertes multipliziert wird und die vier resultierenden Produktwerte zum Erzeugen des Basiswertes aufsummiert werden, die Wichtungswerte bestimmt werden durch Bilden eines Hauptrechteckes, dessen Ecken an den vier Feldpunkten liegen, Dividieren des Hauptrechteckes in vier Unterrechecke durch die Abszisse und Ordinate, die durch den vorliegenden Motordrehzahl- und Lastbeanspruchungspunkt gehen und Berechnen des Wichtungsfaktors für jeden Feldpunkt durch Dividieren der Fläche des diagonal gegenüberliegenden Unterrechteckes durch die Fläche des Hauptrechteckes.

8.  Adaptives Regelsystem nach einem der vorhergehenden Ansprüche, dadurch gekennzeichnet, daß der gestörte Parameter ein Zündzeitpunktparameter ist.

9.  Adaptives Regelsystem nach Anspruch 8, dadurch gekennzeichnet, daß es einen einzigen korrigierten Parameter gibt und daß sowohl der gestörte Parameter als auch der korrigierte Parameter ein Zündzeitpunktparameter sind.

10. Verfahren zum Regeln eines Verbrennungsmotors, wobei der Motor ein über federnde Wellen und eine Getriebeanordnung mit einer Last verbundenes Schwungrad aufweist, das Schwungrad, die federnden Wellen und die Getriebeanordnung ein Resonanzsystem bilden, das eine eigene Resonanzfrequenz für jedes durch die Getriebeanordnung aufgestellte Übersetzungsverhältnis hat, dadurch gekennzeichnet, daß das Verfahren aufweist: Stören eines Motorregelparameters (hier im folgenden als "der gestörte Parameter" bezeichnet) durch Erzeugen einer periodischen Störungswellenform, Anlegen einer positiven Störung an den gestörten Parameter während eines ersten Teiles einer jeden Periode der Störwellenform und einer negativen Störung an den gestörten Parameter während eines zweiten Teiles einer jeden Periode der Störwellenform, wobei jede Periode der Wellenform gleich einer ganzen Zahl von Motorzündperioden ist und die Frequenz der Wellenform größer als Dreiviertel der höchsten Resonanzfrequenz des Resonanzsystems ist; Erzeugen von mindestens einer Reihe von aneinandergrenzenden positiven und negativen Meßfenstern, die mit dem ersten bzw. zweiten Teil der Störwellenform verknüpft sind, wobei jedes Meßfenster gegenüber seinem entsprechenden Teil der Störwellenform um eine vorbestimmte Phasenverschiebung verzögert ist; Berechnen der Steigung des Motorausgangsdrehmomentes in bezug auf den gestörten Parameter aus der Änderung der Motordrehzahl zwischen benachbarten Meßfenstern und Benutzen der Steigung zum Anlegen einer Korrektur an mindestens einen Motorregelparameter (von denen jeder hier im folgenden als "ein korrigierter Parameter" bezeichnet wird).

11. Verfahren zum Regeln eines adaptiven Verbrennungsmotors nach Anspruch 10, dadurch gekennzeichnet, daß das Verfahren weiter aufweist Akkumulieren für jedes positive Meßfenster der Zündperioden, deren Zentralpunkte in das positive Fenster fallen, Akkumulieren für jedes negative Meßfenster der individuellen Zündperioden, deren Zentralpunkte in das negative Fenster fallen, und Berechnen der Steigung aus den gesamten Zündperioden, die in den gesamten Zündperioden für benachbarte Meßfenster akkumuliert sind.

12. Verfahren zum Regeln eines Verbrennungsmotors nach Anspruch 11, dadurch gekennzeichnet, daß die Steigung gemäß der folgenden Schritt berechnet wird: (1) Berechnen einer mittleren Motordrehzahl während jedes Meßfensters durch Dividieren der Zahl von Zündungen, die in dem Fenster auftreten, durch die gesamte Zündperiode, die in dem Fenster akkumuliert wird, und (2) Berechnen jedes Steigungswertes durch Subtrahieren der mittleren Motordrehzahl, die in einem positiven Penster auftritt, von der mittleren Drehzahl, die in dem folgenden negativen Fenster auftritt, zum Erzielen eines ersten Übergangswertes, Subtrahieren der mittleren Motordrehzahl, die in einem negativen Fenster auftritt, von der mittleren Motordrehzahl, die in einem folgenden positiven Fenster auftritt, zum Erzielen eines zweiten Übergangswertes und Subtrahieren des ersten Übergangswertes von dem zweiten Übergangswert zum Erzielen des Steigungswertes.

13. Verfahren zum Regeln eines Verbrennungsmotors nach Anspruch 11, dadurch gekennzeichnet, daß jeder Steigungswert berechnet wird durch Subtrahieren des Produktes der Zahl von Motorzündungen, die in einem positiven Fenster auftreten, und der Gesamtzündperiode, die in einem folgenden negativen Fenster auftritt, von dem Produkt der Gesamtzahl von Zündungen, die in dem folgenden negativen Fenster auftreten, und der Gesamtzündperiode, die in dem einen positiven Fenster auftritt, zum Erzeugen eines ersten Differenzwertes, Subtrahieren des Produktes der Zahl von Motorzündungen, die in einem negativen Fenster auftreten, und der Gesamtzündperiode für ein folgendes positives Fenster von dem Produkt der Gesamtzahl von Zündungen, die in dem folgenden positiven Fenster auftreten, und der Gesamtzündperiode, die in dem einen negativen Fenster auftritt, zum Erzeugen eines zweiten Differenzwertes und Subtrahieren des ersten Differenzwertes von dem zweiten Differenzwert zum Erzeugen des Steigungswertes.

14. Verfahren zum Regeln eines Verbrennungsmotors nach einem der Ansprüche 11-13, dadurch gekennzeichnet, daß der gestörte Parameter ein Zündzeitparameter ist.

15. Verfahren zum Regeln eines Verbrennungsmotors nach Anspruch 14, dadurch gekennzeichnet, daß es einen einzigen korrigierten Parameter gibt und sowohl der gestörte Parameter als auch der korrigierte Parameter ein Zündzeitpunktparameter sind.

FIG.I.

FIG.2.

FIG.3.

EP 0 234 714 B1

FIG.4.

EP 0 234 714 B1

FIG.5.

EP 0 234 714 B1

LOAD INDEX +1

A1    A0

PREVAILING LOAD

A3    A2

LOAD INDEX

SPEED INDEX        PREVAILING      SPEED
                   SPEED           INDEX +1

FIG.6.

SAFIRE

ENG SPEED
≥ 600 RPM — 200

NO → SKK ANG =
SPK ANG BASE — 201

END

YES

COMPUTE ELAPSED TIME
COUNTER = COUNTER
+ ELAPSED TIME — 202

COUNTER+
ELAPSED TIME
> PERT
PERIOD — 203

YES → COUNTER = 0
HALF TIME*PERT PERIOD
DITHER = +3·75° — 204

NO

COUNTER +
(ELAPSED TIME)/2
≥ PERT
PERIOD/2 — 205

NO → (B)

YES

DITHER
= +3·75° — 206

NO → (B)

YES

(A)

FIG.7a.

(A)          (B)

DITHER = -3·75°
HALF TIME = COUNTER          — 207

NUM FIRES =
(PERT PERIOD - COUNTER)/ELAPSED TIME          — 208

PRED PERT PERIOD =
COUNTER +
NUM FIRES • ELAPSED TIME          — 209

FIRE BEFORE LAST = LAST FIRE
LAST FIRE = THIS FIRE          — 210

CALCULATE   THIS   FIRE          — 211

(C)          FIG.7b.

C

EXAMINE FIRE BEFORE LAST —212

REST OF NEG        FIRST POS        REST OF POS        FIRST NEG

CALL LOOK UP CORRECTION —235

SPK ANG OPT =
SPK ANG BASE + CORRECTION —236

SPK ANG =
SPK ANG OPT + DITHER —239

END

FIG.7c.

REST OF NEG

NEG PERIOD =
NEG PERIOD + FIRE PERIOD —213

NEG FIRES =
NEG FIRES + 1 —214

RETURN

FIG.8.

FIRST POS

NEG SPEED =
CONST•NEG FIRES/ NEG PERIOD    —215

SIGNAL FIRST =
NEG SPEED - POS SPEED    —216

POS FIRES = 1    —217

POS PERIOD =
FIRE PERIOD    —218

RETURN

FIG.9.

REST OF POS

POS PERIOD = .
POS PERIOD + FIRE PERIOD    —220

POS FIRES =
POS FIRES + 1    —221

RETURN

FIG.10.

FIRST NEG

POS SPEED = CONST • POS FIRES / POS PERIOD — 225

SIGNAL SECOND = POS SPEED - NEG SPEED — 226

SLOPE = SIGNAL SECOND - SIGNAL FIRST — 227

CALL MAPSTORE — 228

NEG FIRES = 1 — 229

NEG PERIOD = FIRE PERIOD — 230

RETURN

FIG. 11.

FIRST POS

SIGNAL FIRST =
POS PERIOD • NEG FIRES
- NEG PERIOD • POS FIRES ——240

POS FIRES = 1 ——217

POS PERIOD = FIRE PERIOD ——218

RETURN

FIG.12.

FIRST NEG

SIGNAL SECOND =
NEG PERIOD • POS FIRES
- POS PERIOD • NEG FIRES ——241

SLOPE =
SIGNAL SECOND-SIGNAL FIRST ——227

CALL
MAP STORE ——228

NEG FIRES = 1 ——229

NEG PERIOD = FIRE PERIOD ——230

RETURN

FIG.13.